# EUROPEAN PATENT APPLICATION

(11) **EP 4 443 683 A1**
(43) Date of publication of application: **09.10.2024**
(21) Application number: 22897741.9
(22) Date of filing: 21.11.2022
(51) Int. Cl.: H02H 9/04, H02H 9/02

(54) **LIGHTNING STRIKE PROTECTION METHOD, LIGHTNING STRIKE PROTECTION APPARATUS, POWER SUPPLY MODULE, AND BASE STATION**

(30) Priority: 29.11.2021 CN 202111430607
(71) Applicant: ZTE Corporation, Shenzhen, Guangdong 518057 (CN)
(72) Inventor: CHENG, Zhouli, Shenzhen, Guangdong 518057 (CN); WANG, Xinkun, Shenzhen, Guangdong 518057 (CN); YANG, Zhiqiang, Shenzhen, Guangdong 518057 (CN)
(74) Representative: Ipsilon
(86) International application number: PCT/CN2022/133131
(87) International publication number: WO 2023/093658

(57) **Abstract**

The present disclosure provides a lightning strike protection method applied to a lightning strike protection apparatus, the lightning strike protection apparatus includes an input terminal and an output terminal; the input terminal includes a positive polarity terminal and a negative polarity terminal; the lightning strike protection apparatus further includes a unidirectional conduction module connected between the positive polarity terminal and the negative polarity terminal, a first capacitor connected at the output terminal, and an anti-reverse slow-start module connected between the unidirectional conduction module and the first capacitor; and the lightning strike protection method includes: controlling the unidirectional conduction module to perform unidirectional conduction from the negative polarity terminal to the positive polarity terminal, so as to lead a reverse current to the positive polarity terminal when the reverse current is generated at the negative polarity terminal. The present disclosure also provides a lightning strike protection apparatus, a power supply module, and a base station.

## Description

### CROSS REFERENCE TO RELATED APPLICATIONS

The present disclosure claims the priority to Chinese Patent Application No. 202111430607.X filed with the CNIPA on November 29, 2021, the contents of which are incorporated herein by reference in their entirety.

### TECHNICAL FIELD

The present disclosure relates to, but is not limited to, the field of communication devices.

### BACKGROUND

Outdoor communication base stations are often struck by lightning, and lightning strikes can affect operating states of the communication base stations and even damage the communication base stations, and pose a serious threat to normal operation of communication systems and communication quality. Power supply modules in the communication base stations are very prone to be damaged by the lightning strikes due to long power input lines externally connected to the power supply modules.

In some related technologies, effectiveness of lightning strike protection for the base stations is desired to be improved.

### SUMMARY

The present disclosure provides a lightning strike protection method, a lightning strike protection apparatus, a power supply module, and a base station.

In a first aspect, the present disclosure provides a lightning strike protection method applied to a lightning strike protection apparatus, the lightning strike protection apparatus includes an input terminal and an output terminal; the input terminal includes a positive polarity terminal and a negative polarity terminal; the lightning strike protection apparatus further includes a unidirectional conduction module connected between the positive polarity terminal and the negative polarity terminal, a first capacitor connected at the output terminal, and an anti-reverse slow-start module connected between the unidirectional conduction module and the first capacitor; and the lightning strike protection method includes: controlling the unidirectional conduction module to perform unidirectional conduction from the negative polarity terminal to the positive polarity terminal, so as to lead a reverse current to the positive polarity terminal when the reverse current is generated at the negative polarity terminal.

In a second aspect, the present disclosure provides a lightning strike protection apparatus, including: an input terminal and an output terminal; the input terminal includes a positive polarity terminal and a negative polarity terminal; the lightning strike protection apparatus further includes a unidirectional conduction module connected between the positive polarity terminal and the negative polarity terminal, a first capacitor connected at the output terminal, an anti-reverse slow-start module connected between the unidirectional conduction module and the first capacitor, and a control module; and the control module is configured to control the unidirectional conduction module to perform unidirectional conduction from the negative polarity terminal to the positive polarity terminal, so as to lead a reverse current to the positive polarity terminal when the reverse current is generated at the negative polarity terminal.

In a third aspect, the present disclosure provides a power supply module, including the lightning strike protection apparatus described herein.

In a fourth aspect, the present disclosure provides a base station, including the power supply module described herein.

### BRIEF DESCRIPTION OF DRAWINGS

FIG. 1 is a schematic diagram of a lightning strike protection circuit;
FIG. 2 is a flowchart illustrating a lightning strike protection method according to the present disclosure;
FIG. 3 is a schematic diagram of a lightning strike protection apparatus according to the present disclosure;
FIG. 4 is another flowchart illustrating some operations in a lightning strike protection method according to the present disclosure;
FIG. 5 is still another flowchart illustrating some operations in a lightning strike protection method according to the present disclosure;
FIG. 6 is yet another flowchart illustrating some operations in a lightning strike protection method according to the present disclosure;
FIG. 7 is a schematic diagram illustrating relationships between various signals according to the present disclosure;
FIG. 8 is yet another flowchart illustrating some operations in a lightning strike protection method according to the present disclosure;
FIG. 9 is yet another flowchart illustrating some operations in a lightning strike protection method according to the present disclosure;
FIG. 10 is yet another flowchart illustrating some operations in a lightning strike protection method according to the present disclosure;
FIG. 11 is another schematic diagram of a lightning strike protection apparatus according to the present disclosure;
FIG. 12 is still another schematic diagram of a lightning strike protection apparatus according to the present disclosure;
FIG. 13 is yet another schematic diagram of a lightning strike protection apparatus according to the present disclosure;
FIG. 14 is yet another schematic diagram of a lightning strike protection apparatus according to the present disclosure;
FIG. 15 is a schematic diagram of a power supply module according to the present disclosure; and
FIG. 16 is a schematic diagram of a base station according to the present disclosure.

### DETAIL DESCRIPTION OF EMBODIMENTS

In order to enable those of ordinary skill in the art to better understand the technical solutions of the present disclosure, a lightning strike protection method, a lightning strike protection apparatus, a power supply module, and a base station provided by the present disclosure are described in detail below with reference to the accompanying drawings.

Exemplary implementations will be described more fully below with reference to the accompanying drawings, but the exemplary implementations illustrated may be implemented in different forms, and should not be interpreted as being limited to the implementations described below. Rather, the implementations are provided to make the present disclosure thorough and complete, and are intended to enable those of ordinary skill in the art to fully understand the scope of the present disclosure.

All the implementations of the present disclosure and the features therein may be combined with each other if no conflict is incurred.

The term "and/or" used herein includes any and all combinations of one or more associated listed items.

The terms used herein are merely used to describe particular implementations, and are not intended to limit the present disclosure. The terms "a" and "the" used herein which indicate a singular form are intended to include a plural form, unless expressly stated in the context. It should be further understood that the terms "include" and/or "be made of" used herein indicate the presence of the described features, integers, steps, operations, elements and/or components, but do not exclude the presence or addition of one or more other features, integers, steps, operations, elements, components and/or combinations thereof.

Unless otherwise defined, all the terms (including technical and scientific terms) used herein have the same meaning as commonly understood by those of ordinary skill in the art. It should be further understood that terms, such as those defined in commonly used dictionaries, should be interpreted as having a meaning that is consistent with a meaning in the context of the related technology and the background of the present disclosure, and should not be interpreted in an idealized or overly formal sense unless expressly so defined herein.

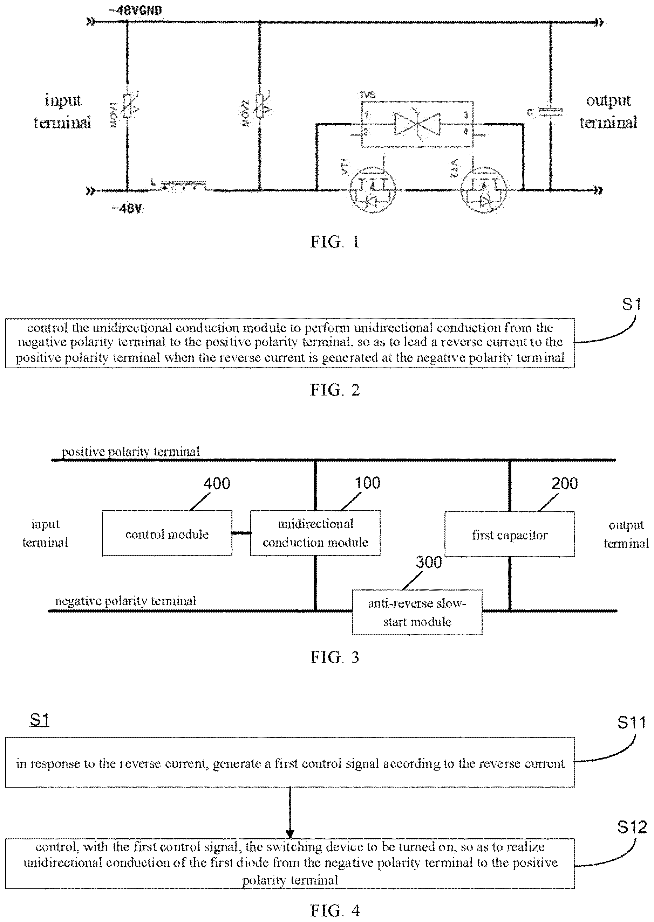

In some related technologies, in order to prevent lightning damage, a two-stage lightning strike protection circuit as shown in FIG. 1 is generally adopted in a power supply module of a base station. A high-capacity varistor, a Transient Voltage Suppressor (TVS) or a multi-gap gas discharge tube is adopted in a first stage to discharge most of lightning energy, a varistor or a TVS is adopted in a second stage to discharge part of the lightning energy, and the energy discharge in the first stage and the energy discharge in the second stage cooperate with each other with a decoupling inductor. The power supply module involves a power conversion module, and an electrolytic capacitor is connected at a front end of the power conversion module for processing energy for the power conversion module; and during forward lightning strikes, the electrolytic capacitor can absorb energy of the lightning strikes to enable the power conversion module to operate at a safe voltage. In addition, the power supply module needs to suppress an inrush current when being started due to the existence of the electrolytic capacitor, and also needs to prevent the damage caused by reverse connection of power input. Therefore, an anti-reverse slow-start circuit needs to be provided at the front end of the power conversion module. An operation principle of the lightning strike protection circuit shown in FIG. 1 is as follows.

During forward lightning strikes, a lightning current enters from -48VGND, the first-stage varistor MOV1 absorbs most of the lightning current, and the second-stage varistor MOV2 and the electrolytic capacitor C absorb the remaining energy; and the Metal-Oxide-Semiconductor Field-Effect Transistors (MOSFETs) VT1 and VT2 are turned on during the forward lightning strikes. During reverse lightning strikes, a lightning current enters from -48V, the first-stage varistor MOV1 absorbs most of the lightning current; and when the current flows into the second stage, the TVS in parallel connection with VT1 and VT2 acts to clamp a voltage at VT1 and VT2 to a safe voltage because VT1 and VT2 are turned off.

It is found that, in the lightning strike protection circuit shown in FIG. 1, a large lightning current also flows through the branch of the TVS when the TVS acts, which may cause discharge of the electrolytic capacitor C, resulting in a rapid drop of a port voltage of the power conversion module. The power conversion module may be damaged due to the rapid drop of the port voltage. In addition, if a system is struck by lightning when the system is not powered on, the forward lightning strikes may not damage the power conversion module, while the lightning current of the reverse lightning strikes can flow into the power conversion module to damage the MOSFETs therein.

In view of the above, in a first aspect, the present disclosure provides a lightning strike protection method applied to a lightning strike protection apparatus shown in FIG. 3. The lightning strike protection apparatus includes an input terminal and an output terminal, and the input terminal includes a positive polarity terminal and a negative polarity terminal. The lightning strike protection apparatus further includes a unidirectional conduction module 100 connected between the positive polarity terminal and the negative polarity terminal, a first capacitor 200 connected at the output terminal, and an anti-reverse slow-start module 300 connected between the unidirectional conduction module 100 and the first capacitor 200. Referring to FIG. 2, the lightning strike protection method at least includes, but is not limited to, the following operation S1:
operation S1, controlling the unidirectional conduction module to perform unidirectional conduction from the negative polarity terminal to the positive polarity terminal, so as to lead a reverse current to the positive polarity terminal when the reverse current is generated at the negative polarity terminal.

It should be noted that the reverse current in the present disclosure refers to a current entering from the negative polarity terminal.

In the present disclosure, a conduction direction of the unidirectional conduction module during conduction is from the negative polarity terminal to the positive polarity terminal. It should be noted that the unidirectional conduction module is turned on when the reverse current is generated in the negative polarity terminal, and is turned off when there is no reverse current in the negative polarity terminal. In some implementations, the unidirectional conduction module has small impedance when being turned on and has large impedance when being turned off. In some implementations, the unidirectional conduction module is equivalent to being in a short circuit when being turned on, and is equivalent to being in an open circuit when being turned off.

A principle of the lightning strike protection method provided by the present disclosure is illustrated below with reference to FIG. 3. When struck by the reverse lightning strikes, the reverse current enters from the negative polarity terminal, the anti-reverse slow-start module 300 is turned off, and the unidirectional conduction module 100 performs unidirectional conduction from the negative polarity terminal to the positive polarity terminal through operation S1, so that the reverse current flows from the negative polarity terminal to the positive polarity terminal through the unidirectional conduction module 100 and flows out from the positive polarity terminal. Thus, the first capacitor 200 is not discharged, a rapid drop of a voltage at the output terminal (i.e., the voltage of the power conversion module) is avoided, and a voltage across two ends of the anti-reverse slow-start module is clamped at a voltage of the first capacitor 200. In a scenario where a system is not powered on, when struck by the reverse lightning strikes, the unidirectional conduction module 100 may also perform unidirectional conduction from the negative polarity terminal to the positive polarity terminal through operation S1, so as to enable the reverse current to flow from the negative polarity terminal to the positive polarity terminal through the unidirectional conduction module 100 and flow out from the positive polarity terminal, thereby preventing the reverse current from flowing into the power conversion module.

It should be noted that, when struck by the forward lightning strikes, the first capacitor 200 can absorb the energy of the lightning strikes to enable the power conversion module to operate at a safe voltage, or to keep the port voltage of the power conversion module at the safe voltage when the system is not powered on, thereby realizing protection against the forward lightning strikes.

With the lightning strike protection method provided by the present disclosure, when struck by the reverse lightning strikes, the reverse current in the negative polarity terminal of the input terminal can be led to the positive polarity terminal and led out from the positive polarity terminal, so that the discharge of the first capacitor 200 connected at the output terminal can be avoided the rapid drop of the port voltage of the power conversion module can be avoided, and the damage to the power conversion module can also be avoided; moreover, the voltage across the two ends of the anti-reverse slow-start module 300 can be clamped at the voltage of the first capacitor 200, so that the reverse current generated due to the reverse lightning strikes can be prevented from flowing into the power conversion module when the system is not powered on, thereby realizing effective protection against the reverse lightning strikes. The lightning strike protection method provided by the present disclosure can also realize effective protection against the forward lightning strikes, so that reliability of the power conversion module can be improved. In addition, there is no need to adopt a TVS device for clamping of the voltage across the two ends of the anti-reverse slow-start module 300 in the present disclosure, which simplifies a structure of the lightning strike protection apparatus, and allows adopting a device with a lower voltage to form the anti-reverse slow-start module 300, thereby reducing cost.

A specific structure of the unidirectional conduction module 100 is not particularly limited in the present disclosure. In some implementations, the unidirectional conduction module 100 is formed from active devices. In some implementations, the unidirectional conduction module 100 is formed from passive devices. For example, a switching device and a diode are combined to form the unidirectional conduction module 100.

It should be noted that a conduction direction of the diode in the present disclosure is from a first electrode to a second electrode.

In some implementations, the unidirectional conduction module 100 includes a first diode and a switching device which are connected in series between the positive polarity terminal and the negative polarity terminal. Referring to FIG. 4, operation S1 may include operations S11 and S12:
operation S11, in response to the reverse current, generating a first control signal according to the reverse current; and
operation S12, controlling, with the first control signal, the switching device to be turned on, so as to realize unidirectional conduction of the first diode from the negative polarity terminal to the positive polarity terminal.

How to generate the first control signal in response to the reverse current is not particularly limited in the present disclosure. In some implementations, the reverse current is converted to generate the first control signal. In some implementations, the first control signal independent of the reverse current is generated in response to the reverse current.

In some implementations, a coupling inductor is provided at the negative polarity terminal of the lightning strike protection apparatus. When the reverse current flows through the coupling inductor, a voltage may be induced, and the unidirectional conduction module 100 may be controlled, with the induced voltage, to be turned on, so that the unidirectional conduction module 100 may operate when struck by the reverse lightning strikes no matter whether the system is powered on, thereby improving the reliability of the system.

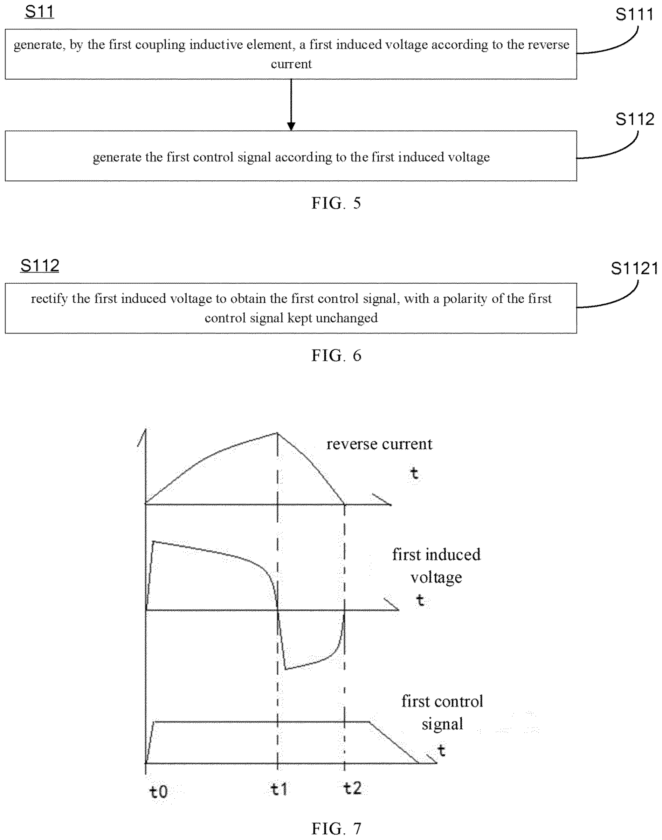

In some implementations, the lightning strike protection apparatus further includes a first coupling inductive element connected between the negative polarity terminal and the unidirectional conduction module. Referring to FIG. 5, operation S11 may include operations S111 and S112:
operation S111, generating, by the first coupling inductive element, a first induced voltage according to the reverse current; and
operation S 112, generating the first control signal according to the first induced voltage.

In some implementations, the first coupling inductive element includes a first winding and a second winding. The operation S111 of generating, by the first coupling inductive element, the first induced voltage according to the reverse current refers to enabling the reverse current to flow through the first winding, so as to induce a voltage, i.e., the first induced voltage, at the second winding.

How to generate the first control signal according to the first induced voltage is not particularly limited in the present disclosure. In some implementations, the first induced voltage is directly taken as the first control signal. In some implementations, the first induced voltage is rectified to obtain the first control signal suitable for the switching device. In some implementations, the first induced voltage is filtered to obtain the first control signal suitable for the switching device. It should be noted that the first control signal suitable for the switching device in the present disclosure refers to that a voltage and a polarity of the first control signal are matched with the switching device.

In some implementations, referring to FIG. 6, operation S112 may include operation S 1121:
operation S1121, rectifying the first induced voltage to obtain the first control signal, with a polarity of the first control signal kept unchanged.

How to rectify the voltage is not particularly limited in the present disclosure. In some implementations, the first induced voltage is subjected to full-wave rectification to obtain the first control signal. FIG. 7 is a schematic diagram illustrating a reverse current, a first induced voltage induced according to the reverse current, and a first control signal obtained by rectifying the first induced voltage. As shown in FIG. 7, the first induced voltage induced according to the reverse current is an alternate current voltage, and the first control signal, which is a direct current voltage during an entire period when the reverse current exists, is obtained through full-wave rectification. It should be noted that performing full-wave rectification on the first induced voltage can increase rectification efficiency, and can easily smooth the first control signal, thereby improving a lightning strike protection effect. In some implementations, the first induced voltage is subjected to half-wave rectified to obtain the first control signal. In some implementations, the first induced voltage is subjected to voltage limiting processing to obtain the first control signal.

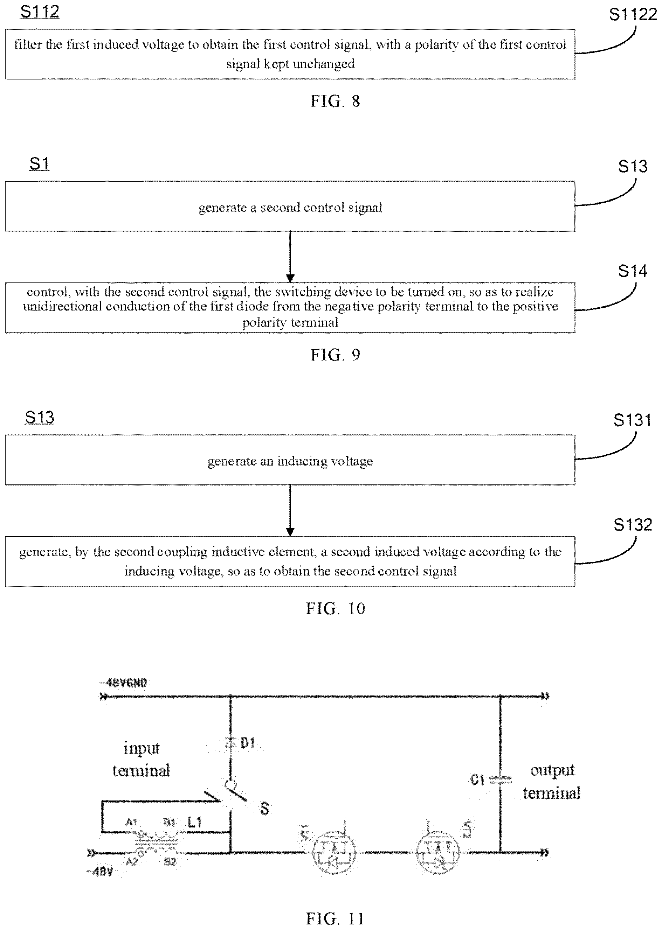

In some implementations, referring to FIG. 8, operation S112 may further include operation S 1122:
operation S1122, filtering the first induced voltage to obtain the first control signal, with a polarity of the first control signal kept unchanged.

It should be noted that an alternate current component in the obtained first control signal can be reduced by filtering the first induced voltage at operation S1122, so that the first control signal can become smooth.

In some implementations, the unidirectional conduction module 100 includes a first diode and a switching device which are connected in series between the positive polarity terminal and the negative polarity terminal. Referring to FIG. 9, operation S1 may include operations S13 and S14:
operation S13, generating a second control signal; and
operation S14, controlling, with the second control signal, the switching device to be turned on, so as to realize unidirectional conduction of the first diode from the negative polarity terminal to the positive polarity terminal.

It should be noted that the second control signal is not related to the reverse current. For example, the second control signal is generated by an independent signal generation circuit. In some implementations, the second control signal independent of the reverse current is generated when the reverse current is generated at the negative polarity terminal. In some implementations, the second control signal is generated when the lightning strike protection apparatus is powered on, so as to turn on the unidirectional conduction module 100, which may realize effective protection against the reverse lightning strikes and avoid affecting normal operation.

In some implementations, when reverse connection of power input occurs, the second control signal is not generated, so that the switching device is turned off, so as to enable the anti-reverse slow-start module 300 to function.

How to generate the second control signal is not particularly limited in the present disclosure.

In some implementations, the lightning strike protection apparatus further includes a second coupling inductive element connected to the unidirectional conduction module 100. Referring to FIG. 10, operation S13 may include operations S131 and S132: operation S 131, generating an inducing voltage; and operation S132, generating, by the second coupling inductive element, a second induced voltage according to the inducing voltage, so as to obtain the second control signal.

It should be noted that, in the present disclosure, the second coupling inductive element includes a first winding and a second winding, and the inducing voltage is a voltage applied to the first winding of the second coupling inductive element for generating an inducing current in the first winding, thereby inducing the second induced voltage at the second winding.

In some implementations, the second induced voltage is the second control signal suitable for the switching device. In some implementations, the second control signal is obtained by performing rectification or filtering on the second coupling inductive element. The present disclosure is not particularly limited thereto.

In a second aspect, referring to FIG. 3, the present disclosure provides a lightning strike protection apparatus, including: an input terminal and an output terminal, and the input terminal includes a positive polarity terminal and a negative polarity terminal. The lightning strike protection apparatus further includes a unidirectional conduction module 100 connected between the positive polarity terminal and the negative polarity terminal, a first capacitor 200 connected at the output terminal, an anti-reverse slow-start module 300 connected between the unidirectional conduction module 100 and the first capacitor 200, and a control module 400, and the control module 400 is configured to control the unidirectional conduction module 100 to perform unidirectional conduction from the negative polarity terminal to the positive polarity terminal, so as to lead a reverse current to the positive polarity terminal when the reverse current is generated at the negative polarity terminal.

It should be noted that the reverse current in the present disclosure refers to a current entering from the negative polarity terminal.

In the present disclosure, a conduction direction of the unidirectional conduction module 100 during conduction is from the negative polarity terminal to the positive polarity terminal. It should be noted that the unidirectional conduction module 100 is turned on when the reverse current is generated in the negative polarity terminal, and is turned off when there is no reverse current in the negative polarity terminal. In some implementations, the unidirectional conduction module has small impedance when being turned on and has large impedance when being turned off. In some implementations, the unidirectional conduction module is equivalent to being in a short circuit when being turned on, and is equivalent to being in an open circuit when being turned off.

A principle of the lightning strike protection apparatus provided by the present disclosure is illustrated below with reference to FIG. 3. When struck by reverse lightning strikes, a reverse current enters from the negative polarity terminal, the anti-reverse slow-start module 300 is turned off, and the unidirectional conduction module 100 performs unidirectional conduction from the negative polarity terminal to the positive polarity terminal, so that the reverse current flows from the negative polarity terminal to the positive polarity terminal through the unidirectional conduction module 100 and flows out from the positive polarity terminal. Thus, the first capacitor 200 is not discharged, a rapid drop of a voltage at the output terminal (i.e., the voltage of the power conversion module) is avoided, and a voltage across two ends of the anti-reverse slow-start module 300 is clamped at a voltage of the first capacitor 200. In a scenario where a system is not powered on, when struck by the reverse lightning strikes, the unidirectional conduction module 100 may also perform unidirectional conduction from the negative polarity terminal to the positive polarity terminal, so as to enable the reverse current to flow from the negative polarity terminal to the positive polarity terminal through the unidirectional conduction module 100 and flow out from the positive polarity terminal, thereby preventing the reverse current from flowing into the power conversion module.

It should be noted that, when struck by forward lightning strikes, the first capacitor 200 can absorb the energy of the lightning strikes to enable the power conversion module to operate at a safe voltage, or to keep the port voltage of the power conversion module at the safe voltage when the system is not powered on, thereby realizing protection against the forward lightning strikes.

With the lightning strike protection apparatus provided by the present disclosure, when struck by the reverse lightning strikes, the reverse current in the negative polarity terminal of the input terminal can be led to the positive polarity terminal and led out from the positive polarity terminal, so that the discharge of the first capacitor 200 connected at the output terminal can be avoided the rapid drop of the port voltage of the power conversion module can be avoided, and the damage to the power conversion module can also be avoided; moreover, the voltage across the two ends of the anti-reverse slow-start module 300 can be clamped at the voltage of the first capacitor 200, so that the reverse current generated due to the reverse lightning strikes can be prevented from flowing into the power conversion module when the system is not powered on, thereby realizing effective protection against the reverse lightning strikes. The lightning strike protection apparatus provided by the present disclosure can also realize effective protection against the forward lightning strikes, so that reliability of the power conversion module can be improved. In addition, there is no need to adopt a TVS device for clamping of the voltage across the two ends of the anti-reverse slow-start module 300 in the present disclosure, which simplifies a structure of the lightning strike protection apparatus, and allows adopting a device with a lower voltage to form the anti-reverse slow-start module 300, thereby reducing cost.

A specific structure of the unidirectional conduction module 100 is not particularly limited in the present disclosure. In some implementations, the unidirectional conduction module 100 is formed from active devices. In some implementations, the unidirectional conduction module 100 is formed from passive devices. For example, a switching device S and a diode are combined to form the unidirectional conduction module 100.

It should be noted that a conduction direction of the diode in the present disclosure is from a first electrode to a second electrode.

In some implementations, referring to FIG. 11, the unidirectional conduction module 100 includes a first diode D1 and a switching device S which are connected in series between the positive polarity terminal and the negative polarity terminal.

The control module 400 is configured to generate, in response to the reverse current, a first control signal according to the reverse current, and control, with the first control signal, the switching device S to be turned on, so as to realize unidirectional conduction of the first diode D1 from the negative polarity terminal to the positive polarity terminal.

It should be noted that the connection of the switching device S to a first electrode of the first diode D1 in FIG. 11 merely illustrates an alternative implementation of positions and connection of the first diode D1 and the switching device S in the present disclosure. In some implementations, the switching device S may be connected to a second electrode of the first diode D1. The present disclosure is not particularly limited thereto.

How to generate, by the control module 400, the first control signal in response to the reverse current is not particularly limited in the present disclosure. In some implementations, the control module 400 converts the reverse current to generate the first control signal. In some implementations, the control module 400 generates, in response to the reverse current, the first control signal independent of the reverse current.

In some implementations, a coupling inductor is provided at the negative polarity terminal of the lightning strike protection apparatus. When the reverse current flows through the coupling inductor, a voltage may be induced, and the unidirectional conduction module 100 may be controlled, with the induced voltage, to be turned on, so that the unidirectional conduction module 100 may operate when struck by the reverse lightning strikes no matter whether the system is powered on, thereby improving the reliability of the system.

In some implementations, referring to FIG. 11, the control module 400 includes a signal processing unit and a first coupling inductive element L1 connected between the negative polarity terminal and the unidirectional conduction module 100; the first coupling inductive element L1 is configured to generate a first induced voltage according to the reverse current; and the signal processing unit is configured to generate the first control signal according to the first induced voltage.

In some implementations, the first coupling inductive element L1 includes a first winding and a second winding. Generating, by the first coupling inductive element L1, the first induced voltage according to the reverse current refers to enabling the reverse current to flow through the first winding, so as to induce a voltage, i.e., the first induced voltage, at the second winding.

How to generate the first control signal according to the first induced voltage is not particularly limited in the present disclosure. In some implementations, the first induced voltage is directly taken as the first control signal. In some implementations, the first induced voltage is rectified to obtain the first control signal suitable for the switching device S. In some implementations, the first induced voltage is filtered to obtain the first control signal suitable for the switching device S. It should be noted that the first control signal suitable for the switching device S in the present disclosure refers to that a voltage and a polarity of the first control signal are matched with the switching device S.

In some implementations, the signal processing unit is configured to rectify the first induced voltage to obtain the first control signal, with a polarity of the first control signal kept unchanged.

How to rectify the voltage is not particularly limited in the present disclosure. In some implementations, the first induced voltage is subjected to full-wave rectification to obtain the first control signal. FIG. 7 is the schematic diagram illustrating the reverse current, the first induced voltage induced according to the reverse current, and the first control signal obtained by rectifying the first induced voltage. As shown in FIG. 7, the first induced voltage induced according to the reverse current is the alternate current voltage, and the first control signal, which is the direct current voltage during the entire period when the reverse current exists, is obtained through full-wave rectification. It should be noted that performing full-wave rectification on the first induced voltage can increase rectification efficiency, and can easily smooth the first control signal, thereby improving a lightning strike protection effect. In some implementations, the first induced voltage is subjected to half-wave rectified to obtain the first control signal. In some implementations, the first induced voltage is subjected to voltage limiting processing to obtain the first control signal.

How to rectify the first induced voltage is not particularly limited in the present disclosure.

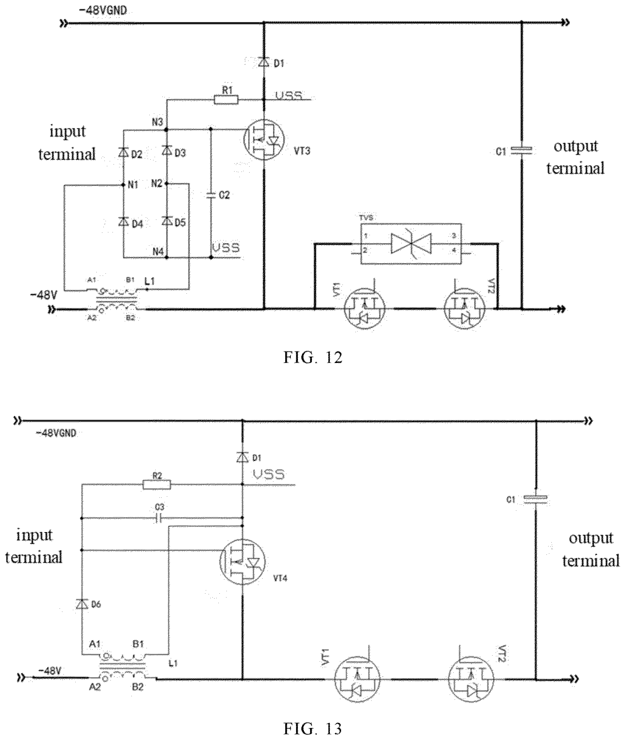

In some implementations, referring to FIG. 12, the signal processing unit includes a second diode D2, a third diode D3, a fourth diode D4, a fifth diode D5, a second capacitor C2, and a first resistor R1. The signal processing unit further includes a first node N1, a second node N2, a third node N3, and a fourth node N4. A second electrode of the second diode D2, a second electrode of the third diode D3, and a second electrode of the second capacitor C2 are connected to the third node N3; a first electrode of the fourth diode D4, a first electrode of the fifth diode D5, and a first electrode of the second capacitor C2 are connected to the fourth node N4; a first electrode of the second diode D2 and a second electrode of the fourth diode D4 are connected to the first node N1; and a first electrode of the third diode D3 and a second electrode of the fifth diode D5 are connected to the second node N2.

The switching device S includes a first power semiconductor device VT3, and a control electrode of the first power semiconductor device VT3 is connected to the third node N3; and the first resistor R1 is connected in series between a gate electrode of the first power semiconductor device VT3 and the first electrode of the first power semiconductor device VT3.

The first electrode of the first diode D1 is connected to the first electrode of the first power semiconductor device VT3, and the second electrode of the first diode D1 is connected to the positive polarity terminal.

The first coupling inductor includes a first winding and a second winding; a first end of the first winding is connected to the negative polarity terminal, and a second end of the first winding is connected to a second electrode of the first power semiconductor device VT3; and a first end of the second winding is connected to the first node N1, and a second end of the second winding is connected to the second node N2.

The first electrode of the first power semiconductor device VT3 and the fourth node N4 are connected to a common electrode terminal VSS.

It should be noted that the full-wave rectification on the first induced voltage can be realized with the circuit of the signal processing unit shown in FIG. 12.

In some implementations, the signal processing unit is configured to filter the first induced voltage to obtain the first control signal, with a polarity of the first control signal kept unchanged.

It should be noted that an alternate current component in the obtained first control signal can be reduced by filtering the first induced voltage, so that the first control signal can become smooth.

How to filter the first induced voltage is not particularly limited in the present disclosure.

In some implementations, referring to FIG. 13, the switching device S includes a second power semiconductor device VT4, the first electrode of the first diode D1 is connected to a first electrode of the second power semiconductor device VT4, and the second electrode of the first diode D1 is connected to the positive polarity terminal.

The signal processing unit includes a sixth diode D6, a third capacitor C3, and a second resistor R2; the third capacitor C3 is connected in series between a control electrode of the second power semiconductor device VT4 and the first electrode of the second power semiconductor device VT4; the second resistor R2 is connected in series between the control electrode of the second power semiconductor device VT4 and the first electrode of the second power semiconductor device VT4; and a second electrode of the sixth diode D6 is connected to the control electrode of the second power semiconductor device VT4.

The first coupling inductor includes a first winding and a second winding; a first end of the first winding is connected to the negative polarity terminal, and a second end of the first winding is connected to a second electrode of the second power semiconductor device VT4; and a first end of the second winding is connected to a first electrode of the sixth diode D6, and a second end of the second winding is connected to the first electrode of the second power semiconductor device VT4.

The first electrode of the second power semiconductor device VT4 is connected to the common electrode terminal VSS.

It should be noted that the filtering on the first induced voltage can be realized with the circuit of the signal processing unit shown in FIG. 13.

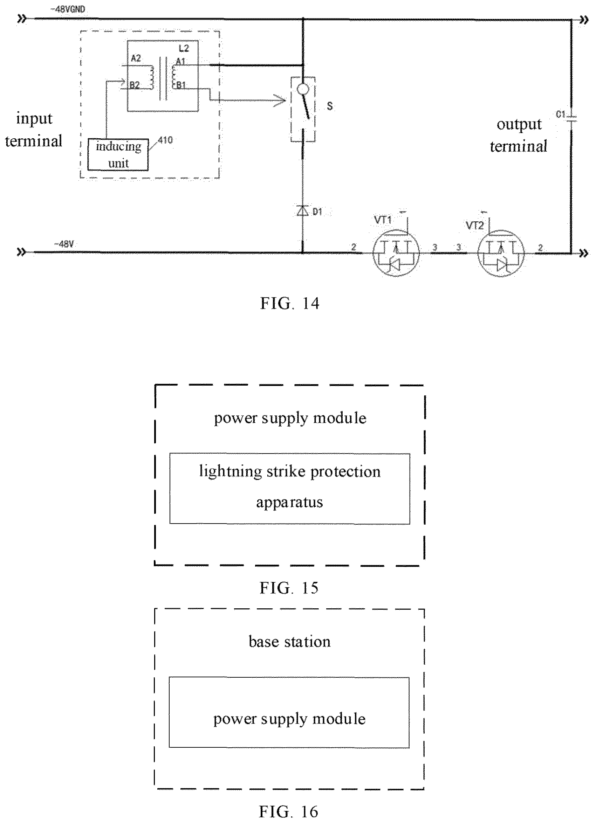

In some implementations, referring to FIG. 14, the unidirectional conduction module 100 includes a first diode D1 and a switching device S which are connected in series between the positive polarity terminal and the negative polarity terminal.

The control module 400 is configured to generate a second control signal and control, with the second control signal, the switching device S to be turned on, so as to realize unidirectional conduction of the first diode D1 from the negative polarity terminal to the positive polarity terminal.

In some implementations, referring to FIG. 14, the control module 400 further includes an inducing unit 410 and a second coupling inductive element L2 connected to the unidirectional conduction module 100; the inducing unit 410 is configured to generate an inducing voltage; and the second coupling inductive element L2 is configured to generate a second induced voltage according to the inducing voltage, so as to obtain the second control signal.

It should be noted that, in the present disclosure, the second coupling inductive element includes a first winding and a second winding, and the inducing voltage is a voltage applied to the first winding of the second coupling inductive element for generating an inducing current in the first winding, thereby inducing the second induced voltage at the second winding.

In some implementations, the second induced voltage is the second control signal suitable for the switching device S. In some implementations, the second control signal is obtained by performing rectification or filtering on the second coupling inductive element. The present disclosure is not particularly limited thereto.

A type of the first diode D1 is not particularly limited in the present disclosure.

In some implementations, the first diode is a semiconductor device parasitic diode.

An implementation way of the unidirectional conduction module is not particularly limited in the present disclosure. For example, the unidirectional conduction module may be implemented by integration of a semiconductor material.

In some implementations, the unidirectional conduction module is a semiconductor integrated circuit.

In a third aspect, referring to FIG. 15, the present disclosure provides a power supply module, including the lightning strike protection apparatus described in the second aspect of the present disclosure.

In a fourth aspect, referring to FIG. 16, the present disclosure provides a base station, including the power supply module described in third aspect of the present disclosure.

In order to enable those of ordinary skill in the art to understand the technical solutions provided by the present disclosure more clearly, the technical solutions provided by the present disclosure are illustrated in detail below by exemplary implementations.

FIG. 11 is a schematic diagram of a lightning strike protection apparatus according to the present disclosure. As shown in FIG. 11, in an exemplary implementation, the anti-reverse slow-start module is formed by connecting the power semiconductor device VT1 to the power semiconductor device VT2 in series; in order to prevent the damage caused by reverse connection of a power supply at the input terminal, the unidirectional conduction module is formed by connecting the first diode D1 VT1 and the switching device S in series, and the positions of the first diode D1 and the switching device S are interchangeable; and the first capacitor C1 is connected at the output terminal.

The control module includes the first coupling inductor L1, the first induced voltage may be induced across pins A1 and B1 of the first coupling inductor due to a voltage across pins A2 and B2 of the first coupling inductor, and the first induced voltage is configured to control the switching device S in the unidirectional conduction module to operate. It should be noted that the first coupling inductor L1 is an important part in the control module, but is not the solely part in the control module.

In the present exemplary implementation, when being turned on, the switching device S has small impedance and is equivalent to being in a short circuit; and when being turned off, the switching device S has large impedance and is equivalent to being in an open circuit.

In the present exemplary implementation, the first diode may be implemented by a power semiconductor parasitic diode.

An operation principle of the lightning strike protection apparatus in the present exemplary implementation is as follows.

When the reverse current is generated due to the reverse lightning strikes, the anti-reverse slow-start circuit is disconnected, and the reverse current may charge a junction capacitor of the power semiconductor device VT1 in the anti-reverse slow-start circuit, at this time, the switch device S is turned on. When a charging voltage of the junction capacitor of the power semiconductor device VT1 in the anti-reverse slow-start circuit is equal to the sum of the voltage of the first capacitor C1 at the output terminal and a voltage drop of the first diode D1, a voltage of the anti-reverse slow-start circuit is clamped at the voltage of the first capacitor C1, with a very low residual voltage. In addition, since the switching device S is turned on, the reverse current may flow from the negative polarity terminal -48V of the input terminal to the positive polarity terminal -48VGND of the input terminal through the first diode D1 and the switching device S of the unidirectional conduction module and flow out from the positive polarity terminal -48VGND of the input terminal, the first capacitor C1 at the output terminal is not discharged, and no instantaneous drop of the voltage occurs, thereby improving the reliability of the power supply module connected to the output terminal.

FIG. 12 is a schematic diagram of a lightning strike protection apparatus according to the present disclosure. In an exemplary implementation, as shown in FIG. 12, the anti-reverse slow-start module is formed by the power semiconductor devices VT1 and VT2; VT1 is used for protection when reverse connection of an input power supply occurs, and VT2 is configured to suppress the inrush current when a power supply is powered on.

In the present exemplary implementation, the transient voltage suppressor device TVS may be connected in parallel with VT1 and VT2, or no transient voltage suppressor device TVS is provided; the unidirectional conduction module is formed by connecting the first diode D1 and the power semiconductor device VT3 in series; the positions of the first diode D1 and the power semiconductor device VT3 are interchangeable, for example, an anode of the first diode D1 is connected to a source electrode of the power semiconductor device VT3 or a cathode of the first diode D1 is connected to a drain electrode of the power semiconductor device VT3; and the output terminal is configured to connect the first capacitor C1 to the power conversion circuit.

Referring to FIG. 12, when the reverse current is generated due to the lightning strikes, the first coupling inductor L1 generates the first induced voltage, and the first induced voltage is subjected to full-wave rectification by the second diode D2, the third diode D3, the fourth diode D4, and the fifth diode D5 to obtain the first control signal configured to drive the power semiconductor device VT3. In the present exemplary implementation, a suitable voltage is obtained through the full-wave rectification on the first induced voltage by the diodes or is obtained by other means, and is taken as the first control signal. For example, the first induced voltage is subjected to half-wave rectification by a half-wave rectification circuit formed by one diode or two diodes, or is processed with a voltage limiting method, so as to obtain the suitable voltage, i.e., obtain the first control signal. The power semiconductor device VT3 is turned on during the lightning strikes, and the voltage of the anti-reverse slow-start module is clamped at the voltage of the first capacitor C1 at the output terminal, with a very low residual voltage. In addition, the reverse current may flow through the unidirectional conduction module, and the voltage of the first capacitor C1 at the output terminal does not drop, thereby improving the reliability of the power conversion circuit. When the system is not powered on, the reverse current generated due to the lightning strikes does not flow into the power conversion circuit, thereby further improving the reliability of the power conversion circuit.

An operation principle of the lightning strike protection apparatus shown in FIG. 12 is briefly described with reference to FIG. 7. The waveforms shown in FIG. 7 include, from top to bottom, a waveform of the reverse current, a waveform of the first induced voltage, and a voltage waveform of the first control signal.

t0→t1, the reverse current rises, the waveform of the first induced voltage is positive, and the first control signal is made to be positive by rectification; and

t1→t2, the reverse current decreases, the waveform of the first induced voltage is negative, and the first control signal is made to be positive by rectification.

In the present exemplary implementation, the first control signal may reach a suitable voltage by amplitude limiting, absorption or voltage reduction for driving the power semiconductor device VT3.

FIG. 13 is a schematic diagram of a lightning strike protection apparatus according to the present disclosure. Referring to FIG. 13, in an exemplary implementation, the anti-reverse slow-start module is formed by the power semiconductor devices VT1 and VT2; VT1 is used for protection when reverse connection of an input power supply occurs, and VT2 is configured to suppress the inrush current when the power supply is powered on; and the output terminal is connected to the first capacitor C1 and the power conversion circuit. VT4 and D1 are connected in series to form the unidirectional conduction module, and the positions of VT4 and D1 are interchangeable; the first winding A2→B2 of the first coupling inductor L1 is connected to a power line at the input terminal, and the second winding A1→B1 of the first coupling inductor L1 is rectified by the sixth diode D6 and is connected to the control electrode of the power semiconductor device VT4; and the third capacitor C3 is used for energy storage and filtering, and the second resistor R2 is connected in series between the control electrode of VT4 and the first electrode (e.g., a source electrode) of VT4.

In the present exemplary implementation, a -48V→-48VGND 6KV 10/50US lightning strike waveform is input to the input terminal. After the unidirectional conduction module is added, during reverse lightning strikes, a peak value of the voltage across the two ends of the anti-reverse slow-start module is 62V and a platform voltage (i.e., the voltage of the first capacitor C1 at the output terminal) is 54V. Compared with a scenario where the unidirectional conduction module is not added, the peak value of the voltage of the anti-reverse slow-start module and the platform voltage are both reduced by 30V, that is, the voltage stress is significantly improved.

In the present exemplary implementation, the addition of the unidirectional conduction module at least has the following advantages.
1) Since the reverse current generated due to the lightning strikes is completely returned to the input terminal through the unidirectional conduction module, the TVS connected in parallel with the anti-reverse slow-start module can be cancelled, thereby reducing product cost.
2) A device with a lower voltage can be adopted as the power semiconductor device for the anti-reverse slow-start module.
3) Due to the existence of the unidirectional conduction module, the first capacitor C1 at the output terminal is not discharged during the lightning strikes, and the rapid drop of the voltage of the first capacitor C1 can be avoided, thereby improving the reliability of the power conversion module connected to the output terminal.
4) The voltage of the unidirectional conduction module comes from the coupling inductor, so that the unidirectional conduction module can still operate if the lightning strikes occur when the system is powered off, and the current can be prevented from flowing into the power conversion module at the output terminal, thereby improving the reliability of the power conversion module.

FIG. 14 is a schematic diagram of a lightning strike protection apparatus according to the present disclosure. In an exemplary implementation, as shown in FIG. 14, the anti-reverse slow-start module is formed by the power semiconductor devices VT1 and VT2; the unidirectional conduction module is formed by connecting the first diode D1 to the switching device S in series; the positions of the first diode D1 and the switching device S are interchangeable; the first capacitor C1 is connected at the output terminal; and the control module is formed by the inducing unit 410 and the second coupling inductor L2, the inducing unit 410 may enable A2-B2 of the second coupling inductor L2 to generate the inducing voltage, and the inducing voltage is coupled to a secondary side A1-B1 of the second coupling inductor L2 to generate the second control signal configured to control the switching device S in the unidirectional conduction module. When the reverse current or voltage is generated due to the lightning strikes, a suitable voltage or current may be generated to control the switching device S to be turned on, so that the energy of the lightning strikes may flow through the switching device S and the first diode D1. At this time, the voltage at VT1 and VT2 in the anti-reverse slow-start module is clamped at the voltage of the first capacitor C1 at the output terminal. In addition, the first capacitor C1 at the output terminal is not discharged, and no instantaneous drop of the voltage occurs, thereby improving the reliability of the power conversion module connected to the output terminal.

The implementations of the present disclosure provide the lightning strike protection method, the lightning strike protection apparatus for implementing the lightning strike protection method, a power supply module adopting the lightning strike protection apparatus, and a base station adopting the power supply module. According to the implementations of the present disclosure, when struck by the reverse lightning strikes, the reverse current in the negative polarity terminal of the input terminal can be led to the positive polarity terminal and led out from the positive polarity terminal, so that the discharge of the first capacitor connected at the output terminal can be avoided the rapid drop of the port voltage of the power conversion module can be avoided, and the damage to the power conversion module can also be avoided; moreover, the voltage across the two ends of the anti-reverse slow-start module can be clamped at the voltage of the first capacitor, so that the reverse current generated due to the reverse lightning strikes can be prevented from flowing into the power conversion module when the system is not powered on, thereby realizing effective protection against the reverse lightning strikes. The lightning strike protection method provided in the implementations of the present disclosure can also realize effective protection against the forward lightning strikes, so that the reliability of the power conversion module can be improved. In addition, according to the implementations of the present disclosure, there is no need to adopt the TVS device for the clamping of the voltage across the two ends of the anti-reverse slow-start module, so that the structure of the lightning strike protection apparatus can be simplified, and the cost can be reduced.

The present disclosure has disclosed the exemplary implementations using specific terms, but the terms are merely used and should be merely interpreted as having general illustrative meanings, rather than for the purpose of limitation. Unless expressly stated, it is apparent to those of ordinary skill in the art that features, characteristics and/or elements described in connection with a particular implementation may be used alone or in combination with features, characteristics and/or elements described in connection with other implementations. Therefore, it should be understood by those of ordinary skill in the art that various changes in the forms and the details may be made without departing from the scope of the present disclosure of the appended claims.

## Claims

1. A lightning strike protection method applied to a lightning strike protection apparatus, the lightning strike protection apparatus comprising an input terminal and an output terminal; the input terminal comprising a positive polarity terminal and a negative polarity terminal; the lightning strike protection apparatus further comprising a unidirectional conduction module connected between the positive polarity terminal and the negative polarity terminal, a first capacitor connected at the output terminal, and an anti-reverse slow-start module connected between the unidirectional conduction module and the first capacitor; and the lightning strike protection method comprising:
controlling the unidirectional conduction module to perform unidirectional conduction from the negative polarity terminal to the positive polarity terminal, so as to lead a reverse current to the positive polarity terminal when the reverse current is generated at the negative polarity terminal.

2. The lightning strike protection method of claim 1, wherein the unidirectional conduction module comprises a first diode and a switching device which are connected in series between the positive polarity terminal and the negative polarity terminal; and controlling the unidirectional conduction module to perform unidirectional conduction from the negative polarity terminal to the positive polarity terminal comprises:
generating, in response to the reverse current, a first control signal according to the reverse current; and
controlling, with the first control signal, the switching device to be turned on, so as to realize unidirectional conduction of the first diode from the negative polarity terminal to the positive polarity terminal.

3. The lightning strike protection method of claim 2, wherein the lightning strike protection apparatus further comprises a first coupling inductive element connected between the negative polarity terminal and the unidirectional conduction module; and generating, in response to the reverse current, the first control signal according to the reverse current comprises:
generating, by the first coupling inductive element, a first induced voltage according to the reverse current; and
generating the first control signal according to the first induced voltage.

4. The lightning strike protection method of claim 1, wherein the unidirectional conduction module comprises a first diode and a switching device which are connected in series between the positive polarity terminal and the negative polarity terminal; and controlling the unidirectional conduction module to perform unidirectional conduction from the negative polarity terminal to the positive polarity terminal comprises:
generating a second control signal; and
controlling, with the second control signal, the switching device to be turned on, so as to realize unidirectional conduction of the first diode from the negative polarity terminal to the positive polarity terminal.

5. The lightning strike protection method of claim 4, wherein the lightning strike protection apparatus further comprises a second coupling inductive element connected to the unidirectional conduction module; and generating the second control signal comprises:
generating an inducing voltage; and
generating, by the second coupling inductive element, a second induced voltage according to the inducing voltage, so as to obtain the second control signal.

6. A lightning strike protection apparatus, comprising: an input terminal and an output terminal; the input terminal comprising a positive polarity terminal and a negative polarity terminal; the lightning strike protection apparatus further comprising a unidirectional conduction module connected between the positive polarity terminal and the negative polarity terminal, a first capacitor connected at the output terminal, an anti-reverse slow-start module connected between the unidirectional conduction module and the first capacitor, and a control module; and
the control module is configured to control the unidirectional conduction module to perform unidirectional conduction from the negative polarity terminal to the positive polarity terminal, so as to lead a reverse current to the positive polarity terminal when the reverse current is generated at the negative polarity terminal.

7. The lightning strike protection apparatus of claim 6, wherein the unidirectional conduction module comprises a first diode and a switching device which are connected in series between the positive polarity terminal and the negative polarity terminal; and
the control module is configured to generate, in response to the reverse current, a first control signal according to the reverse current, and control, with the first control signal, the switching device to be turned on, so as to realize unidirectional conduction of the first diode from the negative polarity terminal to the positive polarity terminal.

8. The lightning strike protection apparatus of claim 7, wherein the control module comprises a signal processing unit and a first coupling inductive element connected between the negative polarity terminal and the unidirectional conduction module;
the first coupling inductive element is configured to generate a first induced voltage according to the reverse current; and
the signal processing unit is configured to generate the first control signal according to the first induced voltage.

9. The lightning strike protection apparatus of claim 6, wherein the unidirectional conduction module comprises a first diode and a switching device which are connected in series between the positive polarity terminal and the negative polarity terminal; and
the control module is configured to generate a second control signal and control, with the second control signal, the switching device to be turned on, so as to realize unidirectional conduction of the first diode from the negative polarity terminal to the positive polarity terminal.

10. The lightning strike protection apparatus of claim 9, wherein the control module comprises an inducing unit and a second coupling inductive element connected to the unidirectional conduction module;
the inducing unit is configured to generate an inducing voltage; and
the second coupling inductive element is configured to generate a second induced voltage according to the inducing voltage, so as to obtain the second control signal.

11. The lightning strike protection apparatus of any one of claims 7 to 10, wherein the first diode is a semiconductor device parasitic diode.

12. The lightning strike protection apparatus of any one of claims 7 to 10, wherein the unidirectional conduction module is a semiconductor integrated circuit.

13. A power supply module, comprising the lightning strike protection apparatus of any one of claims 6 to 12.

14. A base station, comprising the power supply module of claim 13.
